Europäisches Patentamt

European Patent Office

Office européen des brevets

(11) Publication number: **0 347 975**
**A2**

## EUROPEAN PATENT APPLICATION

(21) Application number: **89201521.5**

(51) Int. Cl.⁴: **E21B 43/26**

(22) Date of filing: **13.06.89**

(30) Priority: **23.06.88 US 210271**

(43) Date of publication of application:
**27.12.89 Bulletin 89/52**

(84) Designated Contracting States:
**DE FR GB IT NL**

(71) Applicant: **PUMPTECH N.V.**
**Atlantic House Noorderlaan 147 Bus 5C**
**B-2030 Antwerpen(BE)**
(84) **DE GB IT NL**

Applicant: **COMPAGNIE DES SERVICES**
**DOWELL SCHLUMBERGER**
**Z.I. Molina Chazotte**
**F-42000 St. Etienne(FR)**
(84) **FR**

(72) Inventor: **Cawiezel, Kay E.**
**225 North Elder**
**Broken Arrow Tulsa, OK 74012(US)**

(74) Representative: **Richebourg, Michel**
**Dowell Schlumberger Z.I. Molina Chazotte**
**F-42000 Saint-Etienne(FR)**

(54) **Delayed crosslinking system for fracturing fluids.**

(57) Borate crosslinking of hydrated galactomannan gums in fracturing fluids is delayed by adjusting the release of particulate basic material which is slurried in a hydrophobic carrier. The hydrophobic carrier containing base and a surfactant is dispersed into an aqueous, acidic mixture of the galactomannan gum and a borate-releasing compound. The surfactant effects the slow release of particulate basic material from the hydrophobic slurry thereby gradually raising the pH, allowing time for hydration of the gum prior to activation of the borate crosslinking in the solution when it reaches a basic pH.

EP 0 347 975 A2

## DELAYED CROSSLINKING SYSTEM FOR FRACTURING FLUIDS

This invention relates to the art of well stimulation and, more particularly, to an improved fracturing fluid in which the crosslinking action of a borate ion relative to hydrated galactomannan polymers is delayed.

### Background of the Invention

The use of aqueous-based fluids for the fracturing of a subterranean formation to increase the flow of fluids in the direction of a production well by opening fluid passages within the formation is known in the prior art. In general, an aqueous-based fluid is treated to increase its viscosity and solids carrying ability thereby increasing the efficiency of the process. U.S. Patent 3,058,909 describes a process in which a polyorganic compound having at least one reactive unit consisting of two adjacent hydroxyl groups arranged in a "cis" configuration, such as galactomannan gum, is reacted with a boron compound capable of supplying borate ions in the aqueous fluid. The patentee understood that a galactomannan gum will not hydrate when it is dispersed into an aqueous alkaline solution which contains borate ions but must hydrate in an acid solution. Following hydration in an acid medium, there must be a shift in pH by the addition of a base to the solution which will permit crosslinking of the gum by the borate ions. The patentee perceived that appreciable lengths of time were required for both the hydration and crosslinking mechanisms to occur. Thus, holding tanks and critical time periods are involved in the process of producing a thickened aqueous solution with hydrated, crosslinked galactomannan gums.

This process is successful for small-scale use. However, in oil and gas fields where such aqueous fluids are to be employed as fracturing fluids in large volumes, holding tanks and the time delays involved may rule out such process because of economic and other considerations such as the size of the holding tanks required. Additionally, the high viscosity of the hydrated, crosslinked fluid system creates high friction pressure in the wellbore during injection and greatly increases the horsepower requirement for transporting such fluid to a formation, particularly in a deep wellbore where horsepower requirements become economically prohibitive.

One attempt to overcome the high friction pressure in the wellbore is shown in U.S. Patent 3,974,077. In this method, a fracturing fluid is blended "on-the-fly" in a flowing stream of aqueous fluid so that the sequence of hydration, pH shift and borate crosslinking occurs while the aqueous fluid is being pumped through the borehole so that the viscosity of the fluid reaches a suitable value just prior to its reaching the face of the formation to be fractured. This is accomplished through the use of low pH buffers comprising a mixture of a salt of a weak acid and an organic acid mixed with a base which has a characteristic delayed solubility rate in the aqueous fluid such as akaline earth metal oxides and/or more soluble bases such as alkali metal hydroxides and carbonates which have been treated or coated with a hydrocarbon polymer or wax. By this method, the borate crosslinking of the hydrated gum is delayed by the delay in the shift of the pH from a buffered acidic solution to a moderately basic solution.

U.S. Patent 4,619,776 addresses the problem of premature crosslinking of a hydrated gum solution by employing sparingly soluble borate compounds and minerals which slowly release borate ions for effecting the crosslinking action.

### Summary of the Invention

The present invention provides for delayed crosslinking of a hydrated gum by isolating a particulate base in a hydrophobic carrier fluid and providing for the controlled slow release and solubilization of the base into the aqueous fluid causing a controlled slow shift in pH from acidic to basic thereby activating the borate ion crosslinking mechanism subsequent to gum hydration in the acid medium.

In accordance with the invention, a fracturing fluid comprises an aqueous acidic solution of a galactomannan gum, a borate-ion releasing compound and a base activator slurry comprising a water-soluble base and a non-ionic surfactant slurried in a hydrophobic liquid carrier.

Further in accordance with the invention, the above-described base activator slurry comprises a water-soluble base, an ethoxylated alkylphenol surfactant and liquid hydrocarbon having greater than about six carbon atoms.

Still further in accordance with the invention, a method of fracturing a subterranean formation comprises admixing a galactomannan gum in an aqueous acidic solution with a borate-ion releasing compound and a hydrophobic liquid containing a particulate water-soluble base and a non-ionic surfactant dispersed therewithin and injecting the admixture into the subterranean formation.

It is therefore an object of this invention to produce a fracturing fluid which results in low friction pressure in the wellbore thereby reducing the pumping horsepower requirements for injecting the fracturing fluid into a subterranean formation by providing for delayed crosslinking of the fluid components during pumping into the well.

It is yet another object of this invention to achieve low friction pressure in the wellbore while obtaining maximum viscosity at the formation face for improved proppant transport and fracture capabilities by adjusting the delay time for activating the crosslinking mechanism.

Detailed Description of Preferred Embodiments

In the "on-the-fly" process described in U.S. Patent 3,974,077, the borate-gum system generally comprised a dry solids mix so that while an aqueous fluid is being introduced into and through the borehole which penetrates to the subterranean formation, the gum is first hydrated and then crosslinked. This minimizes the friction pressure in the wellbore and maximizes the viscosity at the fracture for improved proppant transport capability. The constituents comprise galactomannan gum, a buffer to adjust the initial pH of the aqueous fluid to an acid value, a borate releasing compound and a compound which adjusts the pH of the fluid from acidic to basic after a certain period of time sufficient to permit the gum to hydrate at the initial acidic pH value. With the gradual shift in the pH to a basic value, the borate crosslinking mechanism is activated thereby forming a viscous gel. This sequence of steps occurs while the aqueous fluid is being pumped into the borehole so that the viscosity of the aqueous fluid reaches a suitable value prior to its reaching the face of the formation to be fractured.

This process has met with limited success in actual field application due to the inaccuracies present in a dry chemical blending process. For this reason, controlled delayed crosslinking of gum-borate aqueous fluid systems have not been commercially successful. Furthermore, contact of the dry solid mixture with a common solvent such as water must be closely monitored since the included basic compound can solubilize rapidly thereby shifting the pH to basic and initiating uncontrolled crosslinking before hydration is completed.

The present invention constitutes a significant improvement to this "on-the-fly" dry mixing process of crosslinking an aqueous fracturing fluid. In accordance with the invention, the basic compound which adjusts the pH of the fluid from acidic to basic is slurried in a hydrophobic liquid carrier which allows more accurate metering of the base activator and reduced manpower requirements while better controlling the quality of the crosslinked gum. Additionally, the crosslinking time of the fluid can be controlled by controlling the solubilization rate of the base from the hydrophobic liquid activator slurry.

The control of the solubilization is effected by the use of particular surfactants at controlled concentration levels to adjust the release of the solid particulate base in the activator slurry so that crosslinking can be activated by the shift to a basic pH. The activator surfactant frees the base to enter into the water phase and solublize creating the necessary rise in pH for effective activation of the gum-borate crosslinking mechanism in the fracturing fluid system. The dispersing surfactant promotes stabilizing of the base/carrier suspension. The surfactants further reduce the viscosity of the base and carrier suspension thereby decreasing the amount of shear necessary to disperse the mixture into the fracturing fluid.

The basic compounds which can be employed in the crosslinking activator slurry include basic materials which have a characteristic delayed solubility rate in the aqueous fluid such as magnesium oxide, barium oxide and calcium oxide and/or other particulate basic compounds which, when dispersed in a hydrophobic liquid carrier have a delayed shifting effect on the pH of an aqueous fluid. The particulate basic material is preferably finely divided (size less than 200 mesh) to achieve the desired crosslink time control. The preferred basic compound is magnesium oxide present in an amount of about 5 to about 35% by weight of the hydrophobic activator slurry. Amounts of magnesium oxide significantly below 5% may produce an unstable suspension while concentrations above 35% may result in an unpumpable suspension. The magnesium oxide is most preferably in the range of about 10% to about 25% by weight in the water hydrophobic activator slurry.

The hydrophobic base carrier fluid is preferably selected from non-volatile aliphatic and aromatic hydrocarbons and mixtures thereof. Such hydrcarbons should have at least six carbon atoms chain-length. The preferred solvent is diesel oil present in an amount from about 92 to about 65% by weight, 87 to 70% by weight being most preferred.

A suspension aid is also preferred for keeping the basic compound suspended in the hydrophobic carrier. Such suspension agents include organophilic clay in an amount of about 0.5% to about 2.5% by weight of the slurry. The most preferred suspension agent concentration is from about 1.1% to about 2.3% by weight. A small amount of surfactant may also be used as a dispersing agent that in conjunction with the organophilic clay, acts to stabilize the activator slurry.

In accordance with the invention, the hydrophobic activator slurry further includes an activator surfactant capable of dispersing the slurry into the aqueous fracturing fluid thereby releasing the basic compound and allowing the rise in the pH. This surfactant may be the same surfactant as that used as a dispersing agent for stabilizing the slurry but present in larger amounts. However, the preferred activator surfactant is an ethoxylated adduct of alkylphenol with 1 to 10% ethoxylation of the chain lengths ranging from 3 to 20 ethoxylate units in an aromatic hydrocarbon solvent, the aromatic solvent constituting 40-60% by weight of the surfactant solution.

The preparation of the hydrophobic crosslinked activator slurry and a fracturing fluid are illustrated by the following examples:

## Example 1

A hydrophobic crosslink activator slurry is prepared by placing a hydrocarbon solvent such as No. 2 diesel into a container. The diesel will comprise 73.2% by weight of the completed slurry. 0.5% dispersing agent such as ethoxylated nonylphenol is then mixed into the diesel at high speed for about five minutes. A suspension aid such as organophilic clay in an amount of 1.3% by weight is then added to the hydrocarbon and dispersing agent mixture with sufficient shear to disperse and activate the clay, usually about thirty minutes of high-speed mixing. Finally, 25% by weight magnesium oxide (200 mesh) is slowly added to the mixture which is being agitated at high speed and mixing is continued for thirty minutes. The activator slurry prepared as above was analyzed for viscosity using a Fann 35 viscometer. Viscosity at 170 sec-1 shear rate was 150 cps, a viscosity that is pumpable and meterable. The stability of the suspension stored at 25°C was observed for thirty days and observed for settling. The results of these observations are given in Table 1.

TABLE 1

| SUSPENSION STABILITY OBSERVATION | |
|---|---|
| Day | % Settling |
| 1 | 1 |
| 7 | 4 |
| 30 | 6 |

## Example 2

A thousand gallons of hydrophobic crosslink activator slurry was prepared in accordance with the procedures of Example 1 utilizing 911 gallons of diesel oil, 5 gallons of ethoxylated nonylphenol, 110 pounds of organophilic clay and 2127 pounds of magnesium oxide. The produced slurry had similar viscosity and suspension stability properties to that shown in Example 1.

## Example 3

A base gel fluid for use as a fracturing fluid and for laboratory testing with the above hydrophobic crosslink activator slurry was prepared as follows: 10 grams of potassium chloride was added to 500 ml. of water in a blender jar and the pH was adjusted to 6 to 7.5. With the blender running at a speed to create a vortex down to the blades, 2.4 grams of hydroxypropyl guar was added and stirring was continued at a lower rate to prevent inclusion of air bubbles in the gel. 0.18 grams of boric acid was then added to the mixture and the gel was allowed to hydrate for at least thirty minutes. The pH of the gel was about 5.6 to about 6.6.

In testing the above gel fluid, the crosslink activator slurry of Example 1 was blended with varying amounts of ethoxylated nonylphenol as a crosslinking control agent and 400 ml. of the above gel fluid in a blender jar at sufficient rpm to form a strong vortex. Table 2 (below) sets forth the amount of activator slurry (Example 1) and additional surfactant (control agent) utilized in this system to produce vortex closure within the measured period of time. Vortex closure is taken to be the termination of gel crosslinking.

### TABLE 2

| VORTEX CLOSURE CROSSLINK TIME | | |
|---|---|---|
| Crosslinker Activator Slurry (ml.) | Activator Surfactant (ml.) (Surfactant/Slurry Ratio | Time (min.) |
| 0.25 | 0.0 | 4:16 |
| 0.25 | 0.0625 (.25) | 3:02 |
| 0.25 | 0.125 (.50) | 2:50 |
| 0.25 | 0.25 (1.0) | 2:34 |
| 0.25 | 0.375 (1.5) | 2:32 |

Additional amounts of activator surfactant do not have an adverse effect on the properties of the gel but such additional amounts do not further reduce the crosslink time. The surfactant/slurry ratio is therefore selected for the desired delay time and/or on the basis of economic consideration.

### Example 4

A 7,000 foot well having a 5.5 inch casing is to be fractured with a fracturing fluid pumped at 40 barrels per minute. The fracturing fluid comprises 950 barrels of water gelled with 40 pounds of guar or hydroxypropyl guar per 1,000 gallons of water. The fluid also contains 1.2 pounds of boric acid per thousand gallons of fluid. The pumping time through the casing is approximately 4 minutes. To reduce the friction pressure in pumping the fracturing fluid through the casing, the crosslink time for the gel is adjusted to approximately 2 minutes so that the fluid will crosslink half-way down the casing. In order to accomplish this, 50 gallons of hydrophobic crosslink activator slurry is prepared. The activator slurry comprises 46 pounds of magnesium oxide, 8 pounds of organophilic clay and 3 pounds of dispersing surfactant in 48 gallons of diesel oil. The solid materials are added to the diesel oil containing the surfactant and thoroughly mixed. The activator slurry can be added to the oil/solids mixture during this mixing stage. Alternatively, the activator surfactant can be metered separately into the slurry so that the crosslink time can be varied. The crosslink time is determined by sampling fluid from the frac discharge line downstream of the addition of crosslink activator slurry and measuring the fluid viscosity with a viscometer. A viscosity of 400 centipoise is achieved in 2 minutes using 2.2 gallons of activator slurry per 1,000 gallons of fracturing fluid, the activator slurry containing 1.1 gallons of accelerator surfactant.

While the invention has been described in the more limited aspects of a preferred embodiment thereof, other embodiments have been suggested and still others will occur to those skilled in the art upon a reading and understanding of the foregoing specification. It is intended that all such embodiments be included within the scope of this invention as limited only by the appended claims.

### Claims

1. A gelled fluid for fracturing subterranean formations comprising
   (a) an aqueous acidic solution of a galactomannan gum;
   (b) a proppant;
   (c) a borate-releasing compound; and

(d) a hydrophobic crosslink activator slurry including a particulate water soluble base suspended in a hydrophobic organic carrier and a surfactant.

2. The fracturing fluid as set forth in claim 1 wherein the water soluble base is selected from MgO, BaO and CaO.

3. The fracturing fluid as set forth in claim 1 wherein said hydrocarbon carrier fluid is selected from nonvolatile aromatic and aliphatic hydrocarbon having greater than 6 carbon atoms.

4. The fracturing fluid as set forth in claim 1 wherein said surfactant is an ethoxylated adduct of an alkylphenol with 1 to 10% ethoxylation of the chain lengths ranging from 3 to 20 ethyoxylate units and an alkyl adduct of 8-10 carbon atoms.

5. The fracturing fluid set forth in claim 4 wherein said alky phenol is in an aromatic solvent in amounts of 40 to 60% by weight.

6. The fracturing fluid as set forth in claim 1 wherein said hydrophobic crosslink activator slurry further includes a suspension aid.

7. The fracturing fluid as set forth in claim 6 wherein said suspension aid comprises organophilic clay.

8. The fracturing fluid as set forth in claim 6 wherein said hydrophobic activator slurry comprises about 5 to about 35% by weight base, about 92 to about 65% by weight hydrocarbon carrier and about 0.5 to about 2.5% by weight organophilic clay and about 0.2 to about 1% by weight dispersing agent and an activator surfactant present in a volume ratio of about 0.2 to about 2.0 with respect to the remaining components of the slurry.

9. The fracturing fluid as set forth in claim 1 wherein said surfactant comprises ethoxylated nonylphenol having 3 to 20 ethoxylate units.

10. A method for fracturing a subterranean formation penetrated by a wellbore comprising combining an aqueous acidic solution of galactomannan gum, a proppant, a borate releasing compound and a hydrophobic crosslink activator slurry including a particulate water soluble base suspended in a hydrophobic organic carrier and a surfactant and injecting the combined materials through the wellbore into the subterranean formation.

11. A hydrophobic crosslink activator slurry comprising a particulate water soluble base suspended in a hydrophobic organic carrier and a surfactant.

12. The crosslink activator slurry of claim 13 wherein the water soluble base is selected from MgO, BaO and CaO.

13 . The hydrophobic crosslink activator slurry as set forth in claim 13 wherein said hydrocarbon carrier fluid is selected from non-volatile aromatic and aliphatic hydrocarbons having greater than 6 carbon atoms.

14. The hydrophobic activator slurry of claim 13 wherein said surfactant is an ethoxylated adduct of an alkylphenol with 1 to 10% ethoxylation of the chain lengths ranging from 3 to 20 ethoylate units and an alkyl adduct of 8 to 10 carbon atoms.

15. The hydrophobic crosslink activator slurry of claim 16 wherein said alkylphenol is in an aromatic solvent in amounts of about 40 to about 60% by weight.

16. The hydrophobic crosslink activator slurry as set forth in claim 13 further including a suspension aid.

17. The hydrophobic crosslink activator slurry as set forth in claim 18 wherein said suspension aid comprises organophilic clay.

18. The hydrophobic crosslink activator slurry as set forth in claim 13 wherein said surfactant comprises ethoxylated nonylphenol having 3 to 20 ethoxylate units.